# EUROPÄISCHE PATENTSCHRIFT

(11) **EP 2 643 586 B1**
(45) Veröffentlichungstag und Bekanntmachung des Hinweises auf die Patenterteilung: **04.09.2019**
(21) Anmeldenummer: 11793705.2
(22) Anmeldetag: 23.11.2011
(51) Int. Cl.: F03D 7/02

(54) **VERSTELLVORRICHTUNG ZUM VERSTELLEN EINES ROTORBLATTANSTELLWINKELS EINER WINDENERGIEANLAGE**
ADJUSTMENT DEVICE FOR ADJUSTING AN ANGLE OF INCIDENCE OF A ROTOR BLADE OF A WIND POWER PLANT
DISPOSITIF DE RÉGLAGE POUR AJUSTER L'ANGLE D'ATTAQUE D'UNE PALE DE ROTOR D'ÉOLIENNE

(30) Priorität: 23.11.2010 DE 102010052272
(43) Veröffentlichungstag der Anmeldung: 02.10.2013
(73) Patentinhaber: Wobben Properties GmbH, 26607 Aurich (DE)
(72) Erfinder: EDEN, Georg, 26556 Westerholt (DE)
(74) Vertreter: Eisenführ Speiser
(86) Internationale Anmeldenummer: PCT/EP2011/070800
(87) Internationale Veröffentlichungsnummer: WO 2012/069532

(56) Entgegenhaltungen:
- EP-A2- 1 916 417
- DE-A1- 10 335 575
- DE-A1-102005 030 709
- DE-U1-202006 018 866

## Beschreibung

Die vorliegende Erfindung betrifft eine Verstellvorrichtung zum Verstellen des Anstellwinkels eines Rotorblattes einer Windenergieanlage sowie ein Verfahren zum Betreiben einer solchen.

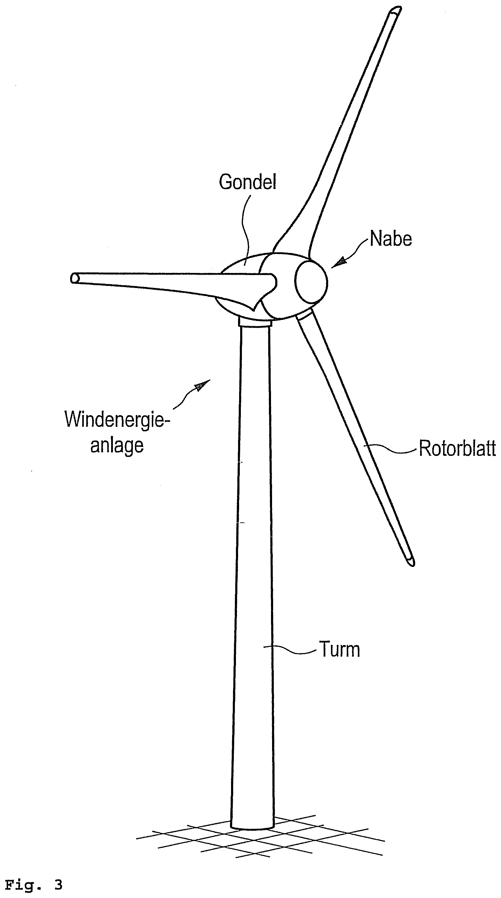

Windenergieanlagen sind allgemein bekannt. Der zurzeit gängigste Anlagentyp ist eine sogenannte Horizontalachsenwindenergieanlage, bei der sich ein vom Wind angetriebener aerodynamischer Rotor im Wesentlichen um eine horizontale Achse dreht. Die Achse weist hierbei im Wesentlichen im stimmungsgemäßen Betrieb in Richtung des Windes und der Rotor weist wenigstens eines, üblicher Weise drei Rotorblätter auf, die eine Rotorfläche überstreichen, die somit im Wesentlichen quer zum Wind angeordnet ist. Figur 3 zeigt eine solche Windenergieanlage.

Abhängig von der Windgeschwindigkeit kann ein Anstellwinkel jedes Rotorblattes zum Wind verändert werden. Das heißt, das Rotorblatt wird im Wesentlichen um seine Längsachse gedreht, um diesen Anstellwinkel und damit Anströmwinkel zu verändern. Der Anstellwinkel wird häufig auch als Pitchwinkel bezeichnet und das Verstellen des Anstellwinkels als Pitchen.

Zum Durchführen des Pitchens wird eine Verstellvorrichtung verwendet, die üblicherweise einen elektrischen Antrieb verwendet. Davon geht auch die vorliegende Erfindung aus. Der elektrische Antrieb wird mittels eines Leistungsteils betrieben, dass durch ein elektrisches Versorgungsnetz mit elektrischer Energie versorgt wird.

Das Leistungsteil zum Versorgen des Verstellantriebs ist an den Verstellantrieb - der auch Pitchantrieb genannt werden kann - angepasst. Gemäß der Erfindung ist die Verwendung eines Gleichstrommotors als Pitchantrieb vorgesehen, dabei arbeitet das Leistungsteil als sogenannter Gleichstromsteller. Das heißt, dass das Leistungsteil einen Gleichstrom mit jeweils der Stromstärke bereitstellt, die zum Ausführen der jeweiligen Verstellbewegung benötigt wird.

Für den Fall eines Ausfalls des elektrischen Versorgungsnetzes ist ein elektrischer Speicher vorgesehen, der für den elektrischen Antrieb genügend Energie gespeichert hat, um das Rotorblatt in eine sogenannte Segelstellung zu verstellen. Es ist immer sicherzustellen, dass dieser elektrische Speicher über diese entsprechende Energiemenge verfügt und er ist somit nach einer Verwendung wieder aufzuladen und ansonsten ist Sorge zu tragen, dass eine etwaige Selbstentladung durch eine sogenannte Erhaltungsladung kompensiert wird.

Das Laden des elektrischen Speichers erfolgt über eine separate Stromquelle, die in ihrer Ausgangsspannung an die Spannung des elektrischen Speichers angepasst ist. Zusätzlich ist eine Erhaltungsladungsvorrichtung vorgesehen, die die beschriebene Erhaltungsladung durchführt. Auch sie ist in ihrer Ausgangsspannung an die Spannung des elektrischen Speichers angepasst und führt eigenständig eine Nachladung des elektrischen Speichers abhängig von seinem Ladezustand durch.

Solche Systeme sind entsprechend komplex, weil sie die beschriebenen Aufgaben zu erfüllen haben und sicher und redundant funktionieren müssen.

Als allgemeiner Stand der Technik sei auf das Dokument DE 20 2006 018 866 U1 verwiesen.

Das Dokument DE 103 35 575 A1 offenbart eine Verstellvorrichtung eines Rotorblatts einer Windenergieanlage und ein Verfahren zu Betreiben einer solchen gemäß den Oberbegriffen der Ansprüche 1 und 6.

Die Aufgabe der vorliegenden Erfindung liegt somit darin, wenigstens eins der genannten Probleme zu beheben oder zu verringern, insbesondere eine möglichst einfache und gleichzeitig sichere und redundante Lösung für die Rotorblattverstellung zu schaffen. Zumindest soll eine alternative Ausführung gefunden werden.

Erfindungsgemäß wird somit eine Verstellvorrichtung gemäß Anspruch 1 vorgeschlagen. Diese weist einen Verstellmotor auf zum Bewegen des Rotorblattes um den Anstellwinkel, also zum Pitchen, eine Ansteuereinheit zum Ansteuern des Verstellmotors mit elektrischem Strom sowie eine Notversorgungseinrichtung zum Versorgen und Ansteuern des Verstellmotors mit elektrischem Strom im Falle eines Ausfalls des Versorgungsnetzes. Die Notversorgungseinrichtung weist einen elektrischen Speicher auf zum Speichern elektrischer Energie um elektrischen Strom zum Ansteuern des Verstellmotors bereitzustellen. Die Anstelleinheit ist zudem dazu vorbereitet, den elektrischen Speicher der Notversorgungseinrichtung mit elektrischer Energie aufzuladen. Die Anstelleinheit ist somit dazu vorbereitet, eine Doppelfunktion auszuführen, nämlich einerseits den Verstellmotor mit dem nötigen elektrischen Strom zu versorgen und andererseits den elektrischen Speicher der Notversorgungseinrichtung aufzuladen.

Es ist zu beachten, dass Rotorblätter moderner Windenergieanlagen mehrere Tonnen wiegen können. Das zurzeit größte bekannte Rotorblatt einer Windenergieanlage weist im Bereich der Rotorblattwurzel, also an dem zur Rotorachse gewandten Abschnitt des Rotorblattes eine Breite von über 5 Metern auf und eine Länge von fast 60 Metern. Dennoch ist insbesondere zum Verhindern von Überlastungen im Falle von starken Böen eine schnelle Verstellbewegung des Rotorblattes erforderlich. Mit anderen Worten wird ein großer, leistungsstarker und gleichzeitig dynamischer Verstellantrieb benötigt. Entsprechend sind die Anforderungen an die Ansteuereinheit. Dabei ist die Ansteuereinheit an das elektrische Verhalten des Verstellmotors angepasst. Insbesondere weist ein solcher Verstellmotor ein induktives Verhalten auf und die Zusammenhänge zwischen Strom und Spannung werden auch durch die Bewegung des Motors beeinflusst, insbesondere stellt sich eine drehzahlabhängige Gegenspannung ein.

Dem entgegen weist ein elektrischer Speicher wie ein Kondensator oder eine Batterie ein ganz anderes Verhalten auf. Die Spannung an einem solchen elektrischen Speicher hängt insbesondere vom Ladezustand und von dem jeweils vorhandenen Innenwiderstand ab. Ein idealer Kondensator weist gar keinen Innenwiderstand auf und die Spannung hängt dann ausschließlich vom Ladezustand ab. Reale Kondensatoren können recht nah an das ideale Verhalten herankommen und unterscheiden sich insoweit grundlegend von dem elektrischen Verhalten einer Induktivität, insbesondere eines Motors.

Erfindungsgemäß wurde erkannt, dass es möglich ist, die Ansteuereinheit auf die jeweilige Aufgabe, nämlich Ansteuern des Verstellmotors einerseits und Laden des elektrischen Speichers andererseits anzupassen bzw. entsprechende Schaltungselemente vorzusehen. Hierdurch kann eine separate Ladeeinheit eingespart werden.

Vorzugsweise ist eine Schalteinrichtung vorgesehen, insbesondere ein oder zwei Schalter um die Ansteuereinheit mit dem elektrischen Speicher der Notspeichereinrichtung zu verbinden, um den elektrischen Speicher zu laden. Hierdurch kann auf einfacher Weise für den Normalbetrieb die Ansteuereinheit mit dem Verstellmotor verbunden werden, um den Verstellmotor anzusteuern. Unter dem Normalbetrieb ist hierbei der Betrieb zu verstehen, bei dem ein elektrisches Versorgungsnetz zum Versorgen der Ansteuereinheit zum Verstellen des Verstellmotors zur Verfügung steht. Zum Laden des elektrischen Speichers der Notspeichereinrichtung braucht diese Schalteinrichtung nur entsprechend umgeschaltet zu werden, um die Ansteuereinheit zum Laden zu verwenden. Diese Schalteinrichtung verbindet somit die Ansteuereinheit entweder mit dem Motor zum Verstellen dieses oder mit dem elektrischen Speicher zum Laden des Speichers.

Vorzugsweise ist eine Erhaltungsladeeinheit zum regelmäßigen Nachladen des elektrischen Speichers und elektrische Energie vorgesehen, um elektrische Energie um die der elektrische Speicher durch Leckströme und/oder durch Selbstentladung entladen wurde nachzuladen. Eine solche Erhaltungsladeeinheit braucht im Vergleich zur Ansteuereinheit nur einen verhältnismäßig geringen Ladestrom bereitzustellen, da sie nur zum Nachladen eines kleinen Teils der Gesamtladekapazität des elektrischen Speichers eingesetzt wird. Sie kann damit vergleichsweise klein dimensioniert werden und ist im Vergleich zur Ansteuereinheit deutlich kostengünstiger.

Vorteilhaft ist es zudem, wenn der elektrische Speicher im Wesentlichen aus Kondensatoren oder aus Blei-Gel-Akkumulatoren besteht. Diese Bauteile erweisen sich als günstige Bauelemente für die Verwendung in einer Verstellvorrichtung, weil sie eine verhältnismäßig hohe Speicherkapazität bereitstellen können und zu dem für den Dauerbetrieb geeignet sind. Auch sind sie dafür geeignet, in einem Rotor einer Windenergieanlage angeordnet und damit ständig gedreht zu werden.

Vorzugsweise wird vorgeschlagen, ein induktives Bauelement und/oder ein Gleichrichtmittel zwischen dem elektrischen Speicher und der Ansteuereinheit anzuordnen. Durch das Gleichrichtmittel wird ein unerwünschtes Entladen des elektrischen Speichers zur Ansteuereinheit vermieden. Durch das induktive Bauelement kann das elektrische Verhalten der elektrischen Speichereinheit aus Sicht der Ansteuereinheit verändert werden, beim Laden der elektrischen Speichereinheit über ein solches induktives Bauelement verändert sich somit die Gesamtladecharakteristik des Ladekreises.

Weiterhin wird ein Verfahren zum Betreiben einer Verstellvorrichtung zum Verstellen des Anstellwinkels eines Rotorblattes einer Windenergieanlage gemäß Anspruch 6 vorgeschlagen. Demnach wird das betreffende Rotorblatt mittels eines Verstellmotors bewegt, nämlich im Wesentlichen um seine Längsachse, um den Anstellwinkel zu verstellen. Der Verstellmotor wird hierbei mittels einer Ansteuereinheit mit elektrischem Strom versorgt. Der Verstellmotor ist somit ein elektrischer Verstellmotor. Insbesondere steuert die Anstelleinheit den notwendigen elektrischen Strom um die gewünschte Bewegung des Verstellstellmotors auszuführen. Die Ansteuereinheit kann hierbei aktuelle Positionen des Verstellmotors und/oder des Rotorblattes berücksichtigen, um die Steuerung im Sinne einer Regelung, also mit Istwert-Rückführung, auszuführen.

Weiterhin umfasst das Verfahren das Laden eines elektrischen Speichers einer Notversorgungseinrichtung mit elektrischer Energie, wobei das Laden mittels derselben Ansteuereinheit erfolgt, die den Verstellmotor mit elektrischem Strom versorgt, insbesondere den Strom steuert. Die Ansteuereinheit ist an ein elektrisches Versorgungsnetz angeschlossen und wird von dort mit elektrischer Energie versorgt.

Weiterhin umfasst das Verfahren das Versorgen und Ansteuern des Verstellmotors mit elektrischem Strom mittels der Notversorgungseinrichtung, wenn das elektrische Versorgungsnetz ausfällt. Die Notversorgungseinrichtung bezieht die Energie zum Bereitstellen des elektrischen Stroms aus dem elektrischen Speicher der Notversorgungseinrichtung. Das Verfahren schlägt somit vor, mittels einer Ansteuereinheit sowohl den Verstellmotor mit elektrischem Strom zu versorgen als auch den elektrischen Speicher der Notversorgungseinrichtung mit elektrischer Energie zu laden.

Vorzugsweise erfolgt das Laden des elektrischen Speichers in wenigstens einem der folgenden Fälle. In einem Fall erfolgt es bei bzw. am Ende der Inbetriebnahme der Windenergieanlage, also einer Erstinbetriebnahme. In einem weiteren Fall erfolgt das Laden nachdem ein Ausfall des Versorgungsnetzes vorgelegen hat, also nachdem nach einem Netzausfall eines oder mehrere Rotorblätter mittels der Notversorgungseinrichtung in den Wind gedreht wurden. Außerdem kann ein Laden des Energiespeichers erfolgen, nachdem dieser gezielt entladen wurde, was beispielsweise zu Testzwecken oder Wartungszwecken des Energiespeichers oder anderer Teile der Einrichtung erfolgen kann. Ein weiterer Fall liegt vor, wenn aufgrund eines Netzausfalls oder einer Netztrennung längere Zeit kein Erhaltungsladung durchgeführt wurde.

Vorzugsweise wird das vorgeschlagene Verfahren mittels einer der oben beschriebenen Verstellvorrichtungen durchgeführt.

Außerdem wird vorgeschlagen, eine Windenergieanlage mit einer solchen Verstellvorrichtung, also einer erfindungsgemäßen Verstellvorrichtung auszustatten. Hierdurch sollen möglichst Kosten der Windenergieanlage reduziert und/oder ihre Effizienz erhöht werden.

Nachfolgend wird die Erfindung beispielhaft unter Bezugnahme auf die begleitenden Figuren näher erläutert.
- Fig. 1: zeigt schematisch eine Schaltung für eine Verstellvorrichtung zum Verstellen des Anstellwinkels eines Rotorblattes gemäß dem Stand der Technik.
- Fig. 2: zeigt schematisch eine Schaltung einer Verstellvorrichtung zum Verstellen des Anstellwinkels eines Rotorblattes gemäß einer Ausführungsform der vorliegenden Erfindung.
- Fig. 3: zeigt eine erfindungsgemäße Windenergieanlage.

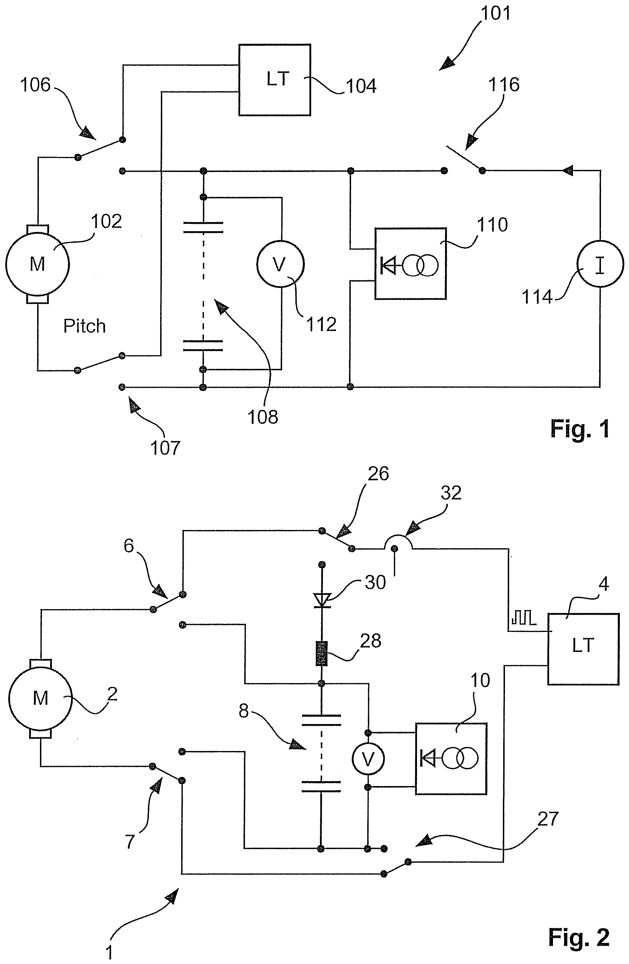

Die Schaltung der Verstelleinrichtung bzw. Verstellvorrichtung 101 weist einen Verstellmotor 102 zum Verstellen des Anstellwinkels auf. Der Verstellmotor 102 wird mittels des Gleichstromstellers 104, der allgemein auch als Leistungsteil bezeichnet werden kann, angesteuert, um einen jeweiligen Verstellvorgang auszuführen. Der Stromsteller 104 wird von einem elektrischen Versorgungsnetz mit Energie versorgt, was der Übersichtlichkeit halber in der Fig. 1 nicht gezeigt ist. Mittels der Umschalter 106 und 107 wird im Normalbetrieb der Windenergieanlage eine elektrisch wirksame Verbindung zwischen dem Gleichstromsteller 104 und dem Verstellmotor 102 hergestellt und die Ansteuerung des Verstellmotors 102 kann somit wie beschrieben durch den Gleichstromsteller 104 erfolgen.

Im Falle eines Netzausfalls des Versorgungsnetzes ist der Verstellmotor 102 mithilfe eines elektrischen Zwischenspeichers 108 zu betreiben. Hierzu werden die Umschalter 106 und 107 in eine Position geschaltet, bei der eine Verbindung zwischen dem elektrischen Zwischenspeicher 108 und dem Verstellmotor 102 hergestellt wird.

Zum Durchführen einer sogenannten Erhaltungsladung ist eine entsprechende Erhaltungsladungsschaltung 110 vorgesehen. Diese sorgt dafür, dass ein geringfügiges Entladen des elektrischen Zwischenspeichers 108, was beispielsweise durch Leckströme und/oder Selbstentladung verursacht wird, verhindert bzw. kompensiert wird. Die Erhaltungsladungsschaltung 110 braucht somit nur für eine geringe Leistung dimensioniert zu sein. Auch die Erhaltungsladungsschaltung 110 wird durch ein elektrisches Versorgungsnetz mit Energie versorgt. Die Spannung des elektrischen Zwischenspeichers 108 wird mittels eines Spannungsmessgerätes 112 gemessen und überprüft. Die gemessene Spannung kann auch Aufschluss über den Ladezustand des elektrischen Zwischenspeichers 108 geben.

Um den elektrischen Zwischenspeicher 108 in einem Umfang zu laden, der über den hinausgeht, den die Erhaltungsladungsschaltung 110 leisten kann, ist eine Ladevorrichtung, insbesondere Stromquelle 114 vorgesehen, die ebenfalls von einem elektrischen Versorgungsnetz gespeist wird, was in der Fig. 1 zur besseren Übersichtlichkeit nicht dargestellt ist. Zum Ausführen der Ladung des elektrischen Zwischenspeichers 108 sind ein Ladeschalter 116 sowie eine Ladevorrichtung 114vorgesehen. Wird der Ladeschalter 116 geschlossen, so kann der elektrische Zwischenspeicher 108 geladen werden.

Erfindungsgemäß ist nun unter anderem eine Verstellvorrichtung vorgesehen, die gegenüber dem Stand der Technik vereinfacht ist. Hierfür wird vorgeschlagen, die Stromquelle 114 einzusparen.

Eine entsprechende Ausführungsform ist in Fig. 2 erläutert. Die dargestellte Schaltung einer Verstellvorrichtung 1 umfasst einen Verstellmotor 2, der über eine Ansteuereinheit 4, die als Gleichstromsteller arbeitet, angesteuert wird. Die als Gleichstromsteller arbeitende Ansteuereinheit 4 erzeugt den zu steuernden Strom gemäß der gezeigten Ausführung mithilfe einer pulszweiten Modulation. Zum Ansteuern des Verstellmotors 2 sind entsprechende Umschalter 6 und 7, sowie 26 und 27 so zu schalten, dass der Gleichstromsteller elektrisch wirksam mit dem Verstellmotor 2 verbunden ist.

Im Falle eines Netzausfalls des Versorgungsnetzes kann eine Ansteuerung des Verstellmotors 2 mittels Energie des elektrischen Zwischenspeichers 8 erfolgen. Die Umschalter 6 und 7 werden entsprechend für diese Situation umgeschaltet. Zum Durchführen einer Erhaltungsladung ist die Erhaltungsladungsschaltung 10 vorgesehen. Eine solche Erhaltungsladungsschaltung 10 ist üblicherweise nicht dafür dimensioniert, eine Ladung durchzuführen, die über die Erhaltungsladung hinausgeht.

Um den elektrischen Zwischenspeicher 8 über eine Erhaltungsladung hinaus ganz oder teilweise aufzuladen wird somit vorgeschlagen, die Ansteuereinheit 4, nämlich den Gleichstromsteller 4 zum Aufladen des elektrischen Zwischenspeichers 8 zu verwenden. Mittels der Umschalter 26 und 27 kann eine elektrisch wirksame Verbindung zwischen der Ansteuereinheit 4 und dem elektrischen Zwischenspeicher 8 hergestellt werden. Bei entsprechender Schalterstellung der Umschalter 26 und 27 ergibt sich ein Ladekreis, in dem auch ein induktives Bauteil, insbesondere eine Drossel 28 sowie ein Gleichrichtmittel insbesondere Diode 30 in Reihen angeordnet sind. Weiterhin ist ein Stromsensor 32 vorgesehen, der den Ladestrom, der zum Laden des elektrischen Speichers 8 gesteuert wird, messen kann. Im Normalbetrieb, wenn die Ansteuereinheit 4 den Verstellmotor 2 ansteuert, kann der Stromsensor 32 auch zum Messen eines etwaigen Ansteuerstroms eingesetzt werden.

Vorzugsweise verwendet die Ansteuereinheit 4 ein pulszweiten moduliertes Verfahren, um einen Ladestrom für den elektrischen Zwischenspeicher 8 zu erzeugen. Hierbei wird zunächst - in grundsätzlich bekannter Weise - ein Pulssignal mit einer Vielzahl von Rechteckimpulsen erzeugt. Um dieses Signal zu glätten und insbesondere auch um Schäden an dem elektrischen Zwischenspeicher zu vermeiden, ist das induktive Bauteil 28 geeignet. Der Verstellmotor 2 einerseits und der elektrische Zwischenspeicher 8 andererseits weisen grundlegend andere elektrische Eigenschaften auf, nämlich der Verstellmotor 2 im Wesentlichen induktive und der elektrische Zwischenspeicher 8 im Wesentlichen kapazitive Eigenschaften. Durch das Vorschalten des induktiven Bauelementes 28 können deren Eigenschaften zumindest ein wenig angeglichen werden, was die vorgeschlagene Möglichkeit einer Doppelnutzung einer Ansteuereinheit zumindest vereinfacht, wenn nicht sogar erst ermöglicht. Ebenso ist vorzugsweise die Ansteuereinheit 4 auf die unterschiedlichen Anforderungen, nämlich Ansteuern eines Verstellmotors 4 einerseits und Laden eines elektrischen Zwischenspeichers 8 andererseits anzupassen.

Das Gleichrichtmittel 30, das als Diode dargestellt ist und als eine solche ausgebildet sein kann, verhindert ein ungewolltes Entladen des elektrischen Zwischenspeichers beispielsweise über die Ansteuereinheit 4.

## Patentansprüche

1. Verstellvorrichtung (1) zum Verstellen des Anstellwinkels eines Rotorblattes einer Windenergieanlage umfassend
- einen Verstellmotor (2) zum Bewegen des Rotorblattes um den Anstellwinkel zu verstellen,
- eine Ansteuereinheit (4) zum Ansteuern des Verstellmotors (2) mit elektrischem Strom, wobei
- die Ansteuereinheit (4) an ein elektrisches Versorgungsnetz angeschlossen ist und
- eine Notversorgungseinrichtung zum Versorgen und Ansteuern des Verstellmotors (4) mit elektrischem Strom im Falle eines Ausfalls des elektrischen Versorgungsnetzes,
wobei die Notversorgungseinrichtung einen elektrischen Speicher (108) aufweist zum Speichern elektrischer Energie, um den elektrischen Strom zum Ansteuern des Verstellmotors (2) bereitzustellen, und wobei die Ansteuereinheit (4) dazu vorbereitet ist, den elektrischen Speicher (8) der Notversorgungseinrichtung mit elektrischer Energie aufzuladen,
**gekennzeichnet dadurch, dass** ein Gleichstrommotor als Verstellantrieb verwendet wird und dass die Ansteuereinheit (4) als Gleichstromsteller arbeitet.

2. Verstellvorrichtung (1) nach Anspruch 1,
**gekennzeichnet durch** eine Schalteinrichtung (26, 27) zum Verbinden der Ansteuereinheit (4) mit dem elektrischen Speicher (8) der Notspeichereinrichtung um den elektrischen Speicher (8) zu laden.

3. Verstellvorrichtung (1) nach Anspruch 1 oder 2,
**gekennzeichnet durch** eine Erhaltungsladeeinheit (10) zum regelmäßigen Nachladen des elektrischen Speichers (8) mit elektrischer Energie, um die der elektrische Speicher (8) durch Leckströme und/oder durch Selbstentladung entladen wurde.

4. Verstellvorrichtung (1) nach einem der vorstehenden Ansprüche,
**dadurch gekennzeichnet, dass** der elektrische Speicher (8) im Wesentlichen aus Kondensatoren und/oder aus Blei-Gel-Akkumulatoren und/oder Lithium-Ionen-Akkumulatoren bestehen.

5. Verstellvorrichtung (1) nach einem der vorstehenden Ansprüche,
**dadurch gekennzeichnet, dass** ein induktives Bauelement (28) und/oder ein Gleichrichtmittel (28) zwischen den elektrischen Speicher (8) und der Ansteuereinheit (4) in Reihe geschaltet ist, sodass beim Laden des elektrischen Speichers (8) mittels der Ansteuereinheit (4) ein Ladestrom von der Ansteuereinheit (4) über dieses induktive Bauelement (28) bzw. dieses Gleichrichtmittel fließt.

6. Verfahren zum Betreiben einer Verstellvorrichtung (1) zum Verstellen des Anstellwinkels eines Rotorblatts einer Windenergieanlage, umfassend die Schritte,
- Bewegen des Rotorblattes mittels eines Verstellmotors (2) um den Anstellwinkel zu verstellen,
wobei der Verstellmotor (2) mittels einer an ein elektrisches Versorgungsnetz angeschlossen Ansteuereinheit (4), mit elektrischem Strom versorgt wird,
- Laden eines elektrischen Speichers (8) einer Notversorgungseinrichtung mit elektrischer Energie mittels der Ansteuereinheit (4) und
- Versorgen und Ansteuern des Verstellmotors (2) mit elektrischem Strom mittels der Notversorgungseinrichtung aus dem elektrischen Speicher (8) der Notversorgungseinrichtung im Falle eines Ausfalls des elektrischen Versorgungsnetzes,
**gekennzeichnet dadurch, dass** der Verstellmotor als Gleichstrommotor ausgebildet ist und dass die Ansteuereinheit (4) als Gleichstromsteller arbeitet.

7. Verfahren nach Anspruch 6,
**dadurch gekennzeichnet, dass** das Laden des elektrischen Speichers (8) bei Inbetriebnahme der Windenergieanlage, nach einem Ansteuern des Verstellmotors (2) mittels der Notversorgungseinrichtung im Falle des Ausfalls des Versorgungsnetzes und/oder nach einer gezielten Entladung des elektrischen Speichers (8) erfolgt.

8. Verfahren nach Anspruch 6 oder 7,
**dadurch gekennzeichnet, dass** eine Verstellvorrichtung (1) nach einem der Ansprüche 1 bis 4 verwendet wird.

9. Windenergieanlage mit einer Verstellvorrichtung (1) nach einem der Ansprüche 1 bis 5.

## Claims

1. An adjusting device (1) for adjusting the pitch angle of a rotor blade of a wind power installation including:
- an adjusting motor (2) for moving the rotor blade through the pitch angle,
- an actuating unit (4) for actuating the adjusting motor (2) with electric current, wherein
- the actuating unit (4) is connected to an electric power supply network, and
- an emergency power supply device for supplying and actuating the adjusting motor (4) with electric current in the event of a failure of the electric power supply network,
wherein the emergency power supply device has an electric storage means (108) for storing electric energy to provide the electric current for actuation of the adjusting motor (2) and wherein the actuating unit (4) is adapted to charge up the electric storage means (8) of the emergency power supply device with electric energy, **characterized in that** a DC motor is used as the adjusting drive and that the drive unit (4) works as a DC-DC converter.

2. An adjusting device (1) according to claim 1 **characterised by** a switching device (26, 27) for connecting the actuating unit (4) to the electric storage means (8) of the emergency storage device to charge the electric storage means (8).

3. An adjusting device (1) according to claim 1 or claim 2 **characterised by** a compensating charging unit (10) for regularly re-charging the electric storage means (8) with electric energy by which the electric storage means (8) was discharged by leakage currents and/or by self-discharge.

4. An adjusting device (1) according to one of the preceding claims **characterised in that** the electric storage means (8) substantially comprises capacitors and/or lead gel accumulators and/or lithium iron accumulators.

5. An adjusting device (1) according to one of the preceding claims **characterised in that** an inductive component (28) and/or a rectifier means (28) is connected in series between the electric storage means (8) and the actuating unit (4) so that upon charging of the electric storage means (8) by means of the actuating unit (4) a charging current flows from the actuating unit (4) by way of said inductive component (28) or said rectifier means.

6. A method of operating an adjusting device (1) for adjusting the pitch angle of a rotor blade of a wind power installation including the steps:
- moving the rotor blade by means of an adjusting motor (2) to adjust the pitch angle,
wherein the adjusting motor (2) is supplied with electric current by means of an actuating unit (4) connected to an electric power supply network, - charging an electric storage means (8) of an emergency power supply device with electric energy by means of the actuating unit (4), and
- supplying and actuating the adjusting motor (2) with electric current by means of the emergency power supply device from the electric storage means (8) of the emergency power supply device in the event of failure of the electric power supply network,
**characterized in that** the adjusting motor is designed as a DC motor and that the Drive unit (4) works as a DC-DC converter.

7. A method according to claim 6 **characterised in that** charging of the electric current (8) is effected when the wind power installation is brought into operation, after actuation of the adjusting motor (2) by means of the emergency power supply device in the event of failure of the power supply network and/or after deliberate discharging of the electric storage means (8).

8. A method according to claim 6 or claim 7 **characterised in that** an adjusting device (1) according to one of claims 1 to 4 is used.

9. A wind power installation having an adjusting device (1) according to one of claims 1 to 5.

## Revendications

1. Dispositif d'ajustement (1) servant à ajuster l'angle d'attaque d'une pale de rotor d'une éolienne, comprenant
- un moteur d'ajustement (2) servant à déplacer la pale de rotor pour ajuster l'angle d'attaque,
- une unité de pilotage (4) servant à piloter le moteur d'ajustement (2) avec un courant électrique, dans lequel
- l'unité de pilotage (4) est raccordée à un réseau d'alimentation électrique, et
- un système d'alimentation d'urgence servant à alimenter et à piloter le moteur d'ajustement (4) avec un courant électrique dans le cas d'une panne du réseau d'alimentation électrique,
dans lequel le système d'alimentation d'urgence présente un accumulateur électrique (108) servant à stocker de l'énergie électrique pour fournir le courant électrique servant à piloter le moteur d'ajustement (2), et dans lequel l'unité de pilotage (4) est préparée pour charger en énergie électrique l'accumulateur électrique (8) du système d'alimentation d'urgence,
**caractérisé en ce qu'**un moteur à courant continu est utilisé en tant qu'entraînement d'ajustement, et que l'unité de pilotage (4) fonctionne en tant que régulateur de courant continu.

2. Dispositif d'ajustement (1) selon la revendication 1,
**caractérisé par** un système de commutation (26, 27) servant à relier l'unité de pilotage (4) à l'accumulateur électrique (8) du système de stockage d'urgence pour charger l'accumulateur électrique (8).

3. Dispositif d'ajustement (1) selon la revendication 1 ou 2,
**caractérisé par** une unité de charge de maintien (10) servant à charger ultérieurement régulièrement l'accumulateur électrique (8) en énergie électrique, de laquelle l'accumulateur électrique (8) a été déchargé par des courants de fuite et/ou par déchargement automatique.

4. Dispositif d'ajustement (1) selon l'une quelconque des revendications précédentes,
**caractérisé en ce que** l'accumulateur électrique (8) est constitué sensiblement de condensateurs et/ou d'accumulateurs en plomb-gel et/ou d'accumulateurs lithiumion.

5. Dispositif d'ajustement (1) selon l'une quelconque des revendications précédentes,
**caractérisé en ce qu'**un composant inductif (28) et/ou un moyen redresseur (28) sont branchés en série entre l'accumulateur électrique (8) et l'unité de pilotage (4), si bien que lors de la charge de l'accumulateur électrique (8) au moyen de l'unité de pilotage (4), un courant de charge s'écoule depuis l'unité de pilotage (4) en passant par ledit composant inductif (28) ou ledit moyen redresseur.

6. Procédé servant à faire fonctionner un dispositif d'ajustement (1) servant à ajuster l'angle d'attaque d'une pale de rotor d'une éolienne, comprenant les étapes
- de déplacement de la pale de rotor au moyen d'un moteur d'ajustement (2) pour ajuster l'angle d'attaque,
dans lequel le moteur d'ajustement (2) est alimenté en courant électrique au moyen d'une unité de pilotage (4) raccordée à un réseau d'alimentation électrique,
- de charge d'un accumulateur électrique (8) d'un système d'alimentation d'urgence en énergie électrique au moyen de l'unité de pilotage (4), et
- d'alimentation et de pilotage du moteur d'ajustement (2) avec un courant électrique au moyen du système d'alimentation d'urgence depuis l'accumulateur électrique (8) du système d'alimentation d'urgence dans le cas d'une panne du réseau d'alimentation électrique,
**caractérisé en ce que** le moteur d'ajustement est réalisé sous la forme d'un moteur à courant continu, et que l'unité de pilotage (4) fonctionne en tant que régulateur de courant continu.

7. Procédé selon la revendication 6,
**caractérisé en ce que** la charge de l'accumulateur électrique (8) est effectuée lors de la mise en service de l'éolienne, après un pilotage du moteur d'ajustement (2) au moyen du système d'alimentation d'urgence dans le cas de la panne du réseau d'alimentation et/ou après le déchargement ciblé de l'accumulateur électrique (8).

8. Procédé selon la revendication 6 ou 7,
**caractérisé en ce qu'**un dispositif d'ajustement (1) selon l'une quelconque des revendications 1 à 4 est utilisé.

9. Eolienne avec un dispositif d'ajustement (1) selon l'une quelconque des revendications 1 à 5.
